Europäisches Patentamt

European Patent Office

Office européen des brevets

(19).

(11) Veröffentlichungsnummer: **0 319 943 B1**

# (12) EUROPÄISCHE PATENTSCHRIFT

(45) Veröffentlichungstag der Patentschrift:
13.03.91 Patentblatt 91/11

(51) Int. Cl.$^5$: **B28B 23/00, B28B 13/02, B28B 3/00**

(21) Anmeldenummer: **88120421.8**

(22) Anmeldetag: **07.12.88**

(54) Verfahren zur Herstellung von Formteilen.

(30) Priorität: **09.12.87 DE 3741689**

(43) Veröffentlichungstag der Anmeldung:
**14.06.89 Patentblatt 89/24**

(45) Bekanntmachung des Hinweises auf die Patenterteilung:
**13.03.91 Patentblatt 91/11**

(84) Benannte Vertragsstaaten:
**AT CH DE ES FR GB IT LI NL SE**

(56) Entgegenhaltungen:
**EP-A- 0 209 320**
**DD-B- 100 058**
**DE-A- 1 939 910**
**DE-A- 2 015 802**
**DE-A- 2 521 036**
**DE-A- 2 525 085**
**DE-A- 3 606 052**
**FR-A- 570 932**

(56) Entgegenhaltungen:
**FR-A- 1 273 585**
**US-A- 1 671 893**
**US-A- 3 604 077**
**US-A- 3 604 077**
**US-A- 4 401 841**
**US-A- 4 401 841**
**PATENT ABSTRACTS OF JAPAN, Band 7, Nr. 203 (M-241)[1348], 8. September 1983; & JP-A-58 101 252 (YAMAHA HATSUDOKI K.K.) 16-06-1983**

(73) Patentinhaber: **Engel, Rudolf**
**Michael-Steinherr-Strasse 17**
**W-8904 Friedberg (DE)**

(72) Erfinder: **Engel, Rudolf**
**Michael-Steinherr-Strasse 17**
**W-8904 Friedberg (DE)**

(74) Vertreter: **Munk, Ludwig, Dipl.-Ing.**
**Patentanwalt Prinzregentenstrasse 1**
**W-8900 Augsburg (DE)**

**Beschreibung**

Die Erfindung betrifft ein Verfahren zur Herstellung von Formteilen gemäß Gattungsbegriff des Anspruchs 1.

Ein Verfahren dieser Art ist aus der EP-A- 209 320 bekannt. Bei diesem bekannten Verfahren finden jedoch SiC-Fasern Verwendung, die in ein- oder zweidimensionaler Anordnung zusammen mit dem keramischen Material in einen Formhohlraum eingebracht werden. Dieses wird hierbei in den Hohlraum eingeschüttet, wobei die Fasern in es eingebettet werden. Hierbei ist es daher sehr schwierig, das Fasermaterial in einer bestimmten Weise zu positionieren und den Formhohlraum zuverlässig zu füllen, insbesondere wenn dieser eine komplizierte Konfiguration aufweist. Dieses bekannte Verfahren ist daher für eine industrielle Herstellung von Serienteilen nicht geeignet.

Aus der DE-A-36 06 052 ist es bekannt, bei der Herstellung von Gehäuseteilen aus thermoplastischem Kunststoff zur Erhöhung der Festigkeit eine vorgefertigte Bewehrung zu verwenden, die in den Formhohlraum eingelegt und in diesem verankert wird. Bei diesem bekannten Verfahren findet jedoch kein keramisches Material Verwendung.

Aus der DE-A-25 25 085 ist ein Verfahren zur Herstellung von unbewehrten Keramikgegenständen wie Fliesen etc. bekannt, bei dem das keramische Material unter Zuhilfenahme von Druckluft in den Formhohlraum eingefüllt wird. Die Verwendung von Druckluft kann jedoch erfahrungsgemäß dazu führen, daß die Verdichtung an der Formoberfläche ungenügend ist. Abgesehen davon ist beim bekannten Verfahren keine Bewehrung vorgesehen. Die hierbei erzielbare Oberflächenqualität und Festigkeit wären daher für Maschinenteile nicht ausreichend.

Hiervon ausgehend ist es daher die Aufgabe der vorliegenden Erfindung, unter Vermeidung der Nachteile der bekannten Lösungen ein Verfahren eingangs erwähnter Art mit einfachen und kostengünstigen Mitteln so zu verbessern, daß bei der Herstellung von Maschinenteilen nicht nur eine gute Oberflächenqualität, sondern auch eine gezielte Verbesserung der Festigkeit und Zähigkeit entsprechend den zu erwartenden Belastungen erreicht werden können.

Diese Aufgabe wird durch die kennzeichnenden Maßnahmen des Anspruchs 1 gelöst.

Mit den erfindungsgemäßen Maßnahmen werden die Nachteile des eingangs diskutierten Standes der Technik vollständig beseitigt. Das aus versteiften Fasermatten hergestellte Traggerüst ergibt einen selbsttragenden Raumkörper, der in vorteilhafter Weise nicht nur einfach und genau positioniert, verankert und gelagert werden kann, sondern auch eine hohe Festigkeit sowohl auf Zug als auch auf Biegung als auch auf Torsion gewährleistet, was durch die verwendeten C-Fasern, die eine sehr hohe Eigenfestigkeit aufweisen, noch verstärkt wird. Hinzu kommt, daß mit den hier Verwendung findenden, versteifbaren Fasermatten praktisch jede Konfiguration herstellbar ist. Das erfindungsgemäß Verwendung findende Traggerüst kann daher eine der Geometrie des herzustellenden Formteils genau angepaßte Geometrie aufweisen, was in vorteilhafter Weise auch bei komplizierten Formen bei der Herstellung von Maschinenteilen eine hohe Festigkeit in allen Bereichen, beispielsweise auch im Bereich vorstehender Augen und dergleichen, ergibt. Ferner ist es hierbei möglich, die Dichte der Fasermatten der Höhe der zu erwartenden Kräfte anzupassen. Es ist daher in jedem Bereich die dort gewünschte Festigkeit bei sparsamem Materialverbrauch erzielbar. Die erfindungsgemäßen Maßnahmen ergeben somit eine Optimierung sowohl hinsichtlich der erzielbaren Armierungswirkung als auch hinsichtlich des Materialverbrauchs. Die Verwendung eines versteiften Fasergeflechts ergibt in vorteilhafter Weise gleichzeitig auch eine für fluidisiertes, pulverförmiges keramisches Material durchlässige Struktur. Es ist daher in vorteilhafter Weise möglich, pulverförmiges, keramisches Material in den Formhohlraum einzuschießen, wobei das pulverförmige, keramische Material fluidisiert wird und in alle Bereiche des Formhohlraums hineinströmt. Es sind daher eine ausgezeichnete Füllung des Formhohlraums sowie eine gute Dichte des keramischen Materials sowie eine ausgezeichnete Einbettung des die Armierung bildenden Traggerüsts und damit insgesamt eine gute Verbundwirkung gewährleistet. Die Folge davon sind nicht nur eine hohe Gesamtfestigkeit, sondern auch eine ausgezeichnete Maßhaltigkeit und Oberflächengüte, da infolge der guten Füllung des Formhohlraums kein nennenswerter Schwund bzw. Verzug beim Brennvorgang zu befürchten ist. Hinzu kommt, daß die Schußfülltechnik auch den Einsatz von sehr fein gemahlenem, keramischem Material gewährleistet und gleichzeitig sicherstellt, daß dieses auch durch verhältnismäßig enge Maschen des Traggerüsts zuverlässig hindurchgezogen wird, was wiederum sicherstellt, daß die Fasermatten ein sehr feines Fasergewebe aufweisen können, das bis in die Randzonen der Querschnittskonfiguration reichen kann, ohne daß sich dies negativ auf die erzielbare Füllung des Formhohlraums mit keramischem Material auswirken könnte. Die aufgrund der erfindungsgemäßen Maßnahmen zulässige Feinheit des keramischen Materials und der Maschengröße im Bereich des Traggerüsts ergänzen sich somit gegenseitig zum Zwecke der Erzielung einer besonders hohen Gesamtfestigkeit und Maßhaltigkeit. Ein weiterer Vorteil dieser Maßnahmen ist darin zu sehen, daß bereits die ungebrannten Rohlinge eine vergleichsweise gute Festigkeit besitzen, was eine gute Transportfähigkeit ergibt. Es besteht daher in vorteilhafter Weise keine Gefahr von Maßänderungen beim Transport der Rohlinge zum Brennofen. Ein weiterer Vorteil der erfindungsgemäßen Maß nahmen ist darin zu sehen, daß die Verankerung bzw. Lagerung des erfindungsgemäßen Traggerüsts in der Form infolge der selbsttragenden Eigenschaften des Traggerüsts an einer oder an wenigen Stellen erfolgen können, die so ausgewählt werden können, daß der dabei sich ergebende Austritt des Traggerüsts aus dem keramischen Material unschädlich ist. Außerhalb hiervon ist eine ununterbrochene, keramische Oberfläche gewährleistet. Die erfindungsgemäßen Maßnahmen ermöglichen somit erstmals die wirtschaftliche Herstellung hochbelastbarer, komplizierter Maschinenteile und zwar nicht nur kleinen, sondern auch großen Formats.

Vorteilhafte Weiterbildungen der übergeordneten Maßnahmen sind in den Unteransprüchen gekennzeichnet.

Nachstehend werden einige Ausführungsbeispiele der Erfindung anhand der Zeichnung näher erläutert.

In der Zeichnung zeigen :
Figur 1 eine Ansicht einer Turbinenschaufel,
Figur 2 eine Ansicht der zur Turbinenschaufel gemäß Figur 1 gehörenden Armierung,
Figur 3 einen Schnitt durch ein Motorgehäuse,
Figur 4 eine Ansicht der zum Motorgehäuse gemäß Figur 3 gehörenden Armierung,
Figur 5 einen Schnitt durch einen Kolben,
Figur 6 einen Längsschnitt durch die zum Kolben gemäß Figur 5 gehörende Armierung,
Figuren 7a, 7b Teilansichten der zur Herstellung einer Armierung gemäß Figur 6 erforderlichen Vorrichtung,
Figur 8 eine perspektivische Ansicht der aus zwei längsgeteilten Hälften gemäß Figur 6 zusammengesetzten, zum Kolben gemäß Figur 5 gehörenden Armierung und
Figur 9 eine Ansicht der zur Herstellung der Turbinenschaufel gemäß Figur 1 und/oder der hierzu gehörenden Armierung gemäß Figur 2 gehörenden Vorrichtung.

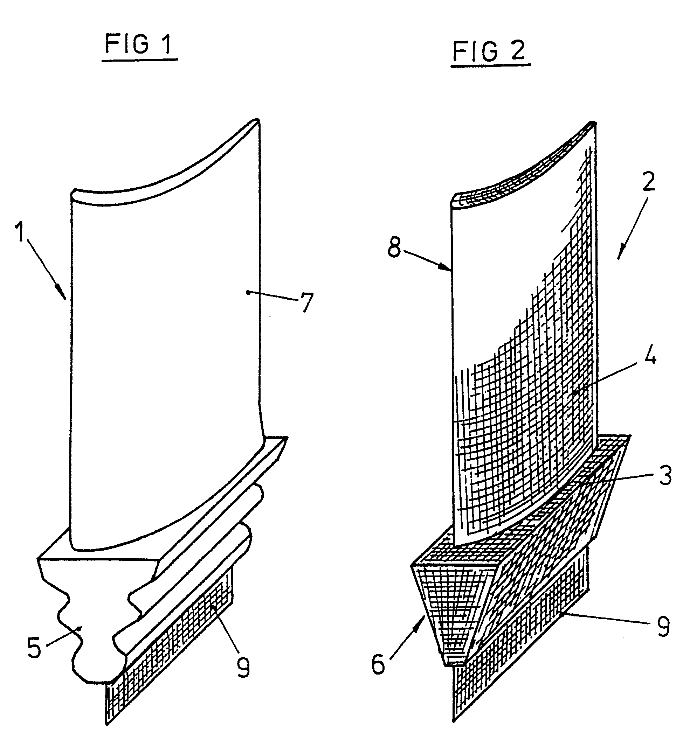

Die der Figur 1 zugrundeliegende Turbinenschaufel ist zur Vermeidung von Bearbeitungsaufwand und zur Gewährleistung einer hohen Oberflächengüte als spanlos hergestelltes Keramikformteil 1 ausgebildet. Dieses ist zur Gewährleistung der geforderten hohen Biege- und Torsionsfestigkeit mit einem in das keramische Grundmaterial eingebetteten Armierungskörper mit gegenüber der umliegenden Keramik erhöhter Zug- und Biegefestigkeit versehen.

Dieser Armierungskörper besteht, wie aus Figur 2 erkennbar ist, aus einem selbsttragenden, in sich steifen, als Kastenbauteil ausgebildeten, räumlichen Traggerüst 2, das hier aus einem versteiften Fasergewebe bzw. Fasergeflecht erstellt ist und somit eine hohe Festigkeit gegen Zug, Druck, Biegung und Torsion aufweist. Als Grundbaustoff für das Fasergewebe bzw. Fasergeflecht können C-Fasern, Si-Fasern, Glasfasern oder dergleichen Verwendung finden. Kohlstoffasern eignen sich im Hinblick auf ihre mit Abstand höchste Festigkeit ganz besondern. Die Versteifung des Fasergewebes bzw. Fasergeflechts kann durch ein Grundgerüst 3 aus Metalldraht etc. gebildet werden, dessen Felder mit Gewebematten 4 aus geeigneten Fasern ausgefacht sind. Die Matten 4 können mit dem Grundgerüst durch Klebung, Schweißung, Spleißung oder dergleichen fest verbunden sein. Alternativ oder zusätzlich können die Matten 4 zur Bewerk stelligung einer Versteifung mit einem Versteifungsmittel behandelt werden. Hierzu können die Matten 4 mit einem Harz wie Epoxydharz oder mit Keramikschlicker getränkt werden, der in getrocknetem oder gebranntem Zustand eine Versteifung bewirkt. Es wäre aber auch denkbar, das Traggerüst 2 als ausschließlich aus Draht- bzw. Stabmaterial erstelltes Raumgitter auszubilden. Die zur Bildung des Grundgerüsts 3 Verwendung findenden Metalldrähte bzw. -stäbe können miteinander verschweißt bzw. verlötet sein. Bei Verwendung von Stäben bzw. Drähten mit kreisförmigen Querschnitt ergibt sich ein besonders geringer Verlust an Keramikquerschnitt.

Der das Traggerüst 2 bildende Armierungskörper besitzt ersichtlich eine der Geometrie des herzustellenden Formteils 1 angepaßte Geometrie. Im dargestellten Ausführungsbeispiel besitzt das Traggerüst 2 ein dem nach unten verjüngten Schaufelfuß 5 zugeordnetes, nach unten verjüngtes Basisgehäuse 6 und ein der gewundenen Schaufel 7 zugeordnetes, gewundenes Aufsatzgehäuse 8. Das Basisgehäuse 6 und das Aufsatzgehäuse 8 sind hier als aneinander angesetzte und fest miteinander verbundene Hohlkörper ausgebildet. Es wäre aber auch eine längsgeteilte oder einstückige Ausführung denkbar. Die Abmessungen und die Kontur des Traggerüsts 2 sind so bemessen, daß seine Wandungen bezüglich der Oberfläche des Formteils 1 weitgehend oberflächenparallel und oberflächennah verlaufen. Im Bereich des dem Fuß 5 zugeordneten Basisgehäuses 6 ist dies nur ungefähr der Fall, was ersichtlich zur Vereinfachung der Geometrie des Basisgehäuses 6 beiträgt. Um dennoch in den vom Basisgehäuse 6 nicht erfaßten Vorsprüngen des Fußes 5 eine gute Fertigkeit zu erzielen, können dem den Fuß 5 bildenden Keramikmaterial Armierungsfasern in Form von Siliciumkarbidfasern oder dergleichen beigemischt sein. Hierdurch kann die erzielbare Oberflächenqualität etwas beeinträchtigt sein, was aber im Bereich des Fußes 5 keine Rolle spielt. Im Bereich der Schaufel 7, wo es auf hohe Oberflächengüte ankommt, finden keine Armierungsfasern Verwendung. Das Aufsatzgehäuse 7 folgt hier daher exakt der Oberflächenkontur.

Im dargestellten Ausführungsbeispiel besitzen die Matten 4 überall dieselbe Maschenweite, da das Formteil 1 praktisch überall einer sehr hohen Beanspruchung ausgesetzt sein wird. Bei Formteilen, die Bereiche mit verschiedener Belastung aufweisen, könnte dem ohne weiteres auch durch eine unterschiedliche Maschenweite der Matten 4 Rechnung getragen werden.

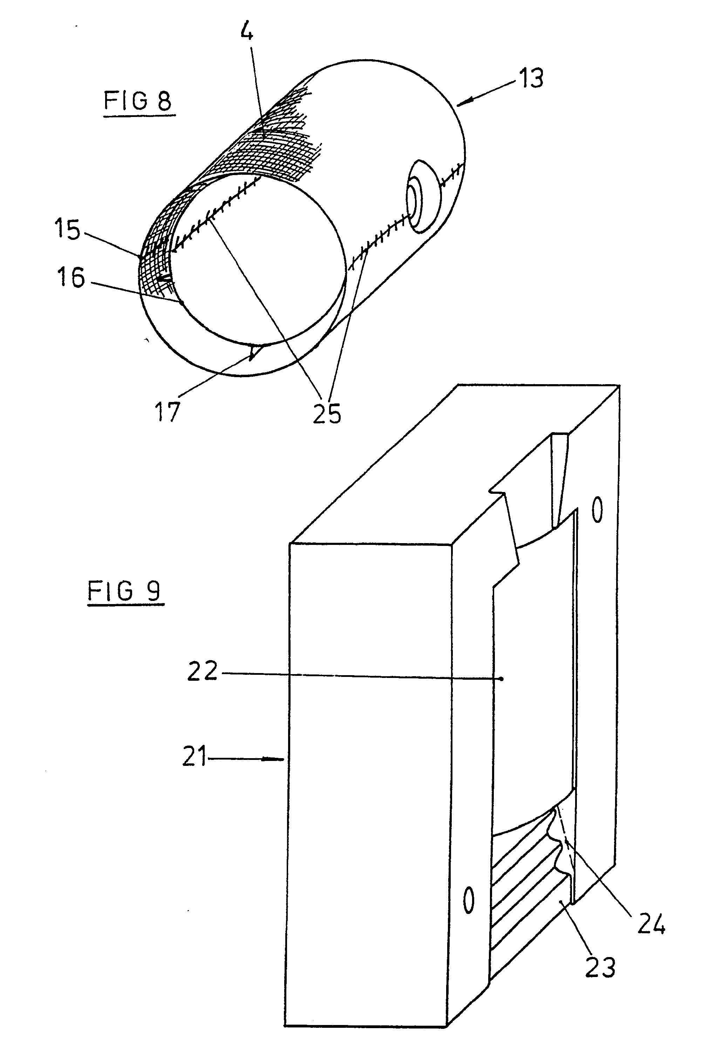

Das Formteil 1, hier in Form der dargestellten Turbinenschaufel, wird durch Brennen eines Rohlings fertiggestellt. Der Rohling wird in einer der Figur 9 zugrundeliegenden Form 21 hergestellt, in deren Hohlraum 22 das gewünschte keramische Material eingebracht wird, in/das die Armierung in Form des Traggerüsts 2 eingebettet wird. Das Traggerüst 2 wird hierzu vor dem Einfüllen des keramischen Materials verschiebesicher am Formwerkzeug fixiert, d.h. verankert und gelagert. Hierzu ist das Traggerüst 2 mit einem oder mehreren Haltern, hier in Form einer Haltelasche 9, versehen, die im Bereich der Teilfuge 23 des Formwerkzeugs eingeklemmt werden kann und die nach der Herstellung des Rohlings bzw. der Fertigstellung des Formteils 1 abgetrennt wird. Die Haltelasche 9, die zunächst zwangsläufig aus dem keramischen Material herausläuft und damit die keramische Oberfläche unterbricht, befindet sich an einer diesbezüglich unbedenklichen Stelle, hier im Bereich des unteren Endes des Schaufelfußes 5. Zur Herstellung des Traggerüsts 2 kann dieselbe Form 21 wie zur Herstellung des Rohlings Verwendung finden, die hierbei durch Einlagestücke 24 ausgefüttert wird, wie im Bereich des Fußes angedeutet ist.

Nach der Befestigung des steifen Traggerüsts 2 am Formwerkzeug wird der verbleibende Formhohlraum 22 mit keramischem Material gefüllt, das die Matten 4 des Traggerüsts durchdringt. Hierbei kann es sich um Schlicker handeln. Besonders geeignet ist jedoch pulverförmiges Granulat, das durch Vakuum fluidisiert und in den Formhohlraum hineingetragen werden kann, was die Erzielung einer vollständigen Füllung erleichtert. Die Füllung des Formhohlraums 22 kann, wie oben schon angedeutet, in Stufen erfolgen der Art, daß zunächst der Fuß 5 und anschließend die Schaufel 7 geformt werden, wobei unterschiedliche Materialien eingebracht werden. Zum Füllen wird der Formhohlraum 22 schlagartig unter Vakuum gesetzt, d. h. abgesaugt, wobei aus einem mit dem Formhohlraum verbundenen Granulatbehälter das Granulat in den Formhohlraum 22 eingeschossen wird. Anschließend können ein oder mehrere Nachschüsse zum Nachfüllen von Granulat bzw. Verdichten der Füllung erfolgen. Als besonders geeignet kann sich eine isostatische Verdichtung erweisen, bei der die Füllung des Formhohlraums allseitig gleichem Druck ausgesetzt wird, so daß eine gleichmäßige Füllung und Verdichtung des keramischen Granulats und damit eine gute Anlagerung des keramischen Granulats an das Traggerüst 2 erreicht werden. Die Fasermatten 4 erweisen sich auch bei enger Maschengröße als luft- und staubdurchlässig, so daß bei Verwendung des Vakuumschußverfahrens zum Füllen des Formhohlraums 22 mit pulverförmigem Granulat auch bei enger Maschenweite eine zuverlässige Füllung gewährleistet ist.

Zum Brennen wird der so hergestellte Rohling in einen Ofen eingebracht. Der Brennvorgang kann unter Luftabschluß bzw. Vakuum erfolgen, so daß evtl. im Bereich der aus dem keramischen Material austretenden Haltelasche 9 vorhandene Fasern oder im Bereich des Fußes 5 beigemischte Fasern nicht oxidieren können, was bei der Verwendung von C-Fasern besonders erwünscht ist. Nach Beendigung des Brennvorgangs wird der gebrannte Formling abgekühlt. Bei Verwendung eines Metall enthaltenden Traggerüsts 2, z.B. mit einem aus Metall bestehenden Grundgerüst 3, wird der Abkühlvorgang dabei so geführt, daß er einem Normalglühvorgang entspricht, womit die Festigkeit der verwendeten Metallbauteile erhalten bleibt. Da infolge der Vakuumfüllung des Formhohlraums 22 und der gleichmäßigen Verdichtung der Füllung beim Brennen kein nennenswerter Verzug zu erwarten ist, bedarf das abgekühlte Formteil keiner weiteren Nachbearbeitung mehr.

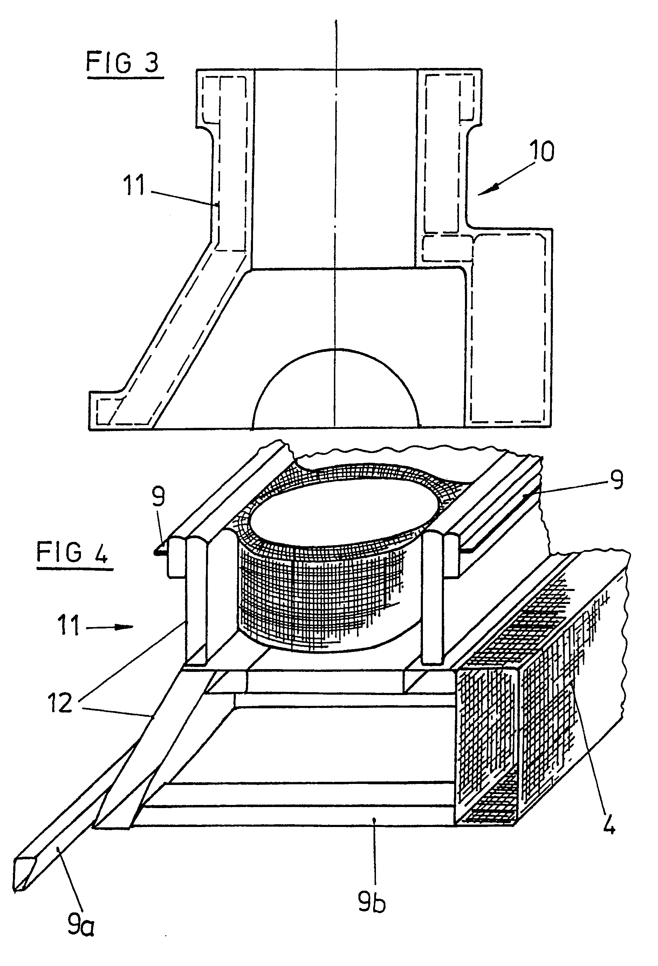

Die erfindungsgemäße Ausbildung der Armierung als selbsttragendes Traggerüst erlaubt auch die Herstellung von Großbauteilen aus keramischem Material. Dementsprechend soll auch der der Figur 3 zugrundeliegende Motorblock 10 als Keramikformteil ausgebildet sein, das mit einer eingebetteten Armierung in Form eines durch gestrichelte Linien angedeuteten Traggerüsts 11 versehen ist. dieses ist hier, wie am besten aus Figur 4 erkennbar ist, aus mehreren, kastenförmigen Hohlprofilträgern 12 zusammengesetzt. Für den speziellen Aufbau des Traggerüsts 11 gelten die obigen Aussagen entsprechend. Zur Verankerung und Lagerung können ebenfalls Haltelaschen 9 vorgesehen sein, die etwa im Bereich des Austritts des Kühlwassers aus dem Motorblock 10 angeordnet sein können. Es wäre aber auch ohne weiteres denkbar, zur Bildung von Haltern einfach einen oder mehrere oder steifen Profilträger 12 so zu verlängern, daß eine Lagerung und Verankerung in der Form möglich ist, wie bei 9a angedeutet ist.

Der Motorblock 10 ist, wie aus Figur 3 erkennbar ist, nach unten offen. Um bei derartigen Formlingen einen Verzug beim Brennen zu vermeiden, kann das zugehörige Traggerüst 11, wie Figur 4 zeigt, mit den offenen Querschnitt überbrückenden Zugbändern 9b versehen sein, die beim fertigen Formstück entfernt werden. Diese Zugbänder eignen sich ebenfalls als Haltemittel. Zum Schutz des im Bereich der Zugbänder 9b vorgesehenen Fasermaterials gegen Sauerstoffangriff ist in diesem Bereich auf jeden Fall eine Behandlung mit Keramikschlicker vorgesehen. Dasselbe gilt für die zur Bildung von Haltemitteln vorgesehenen Verlängerungen 9a.

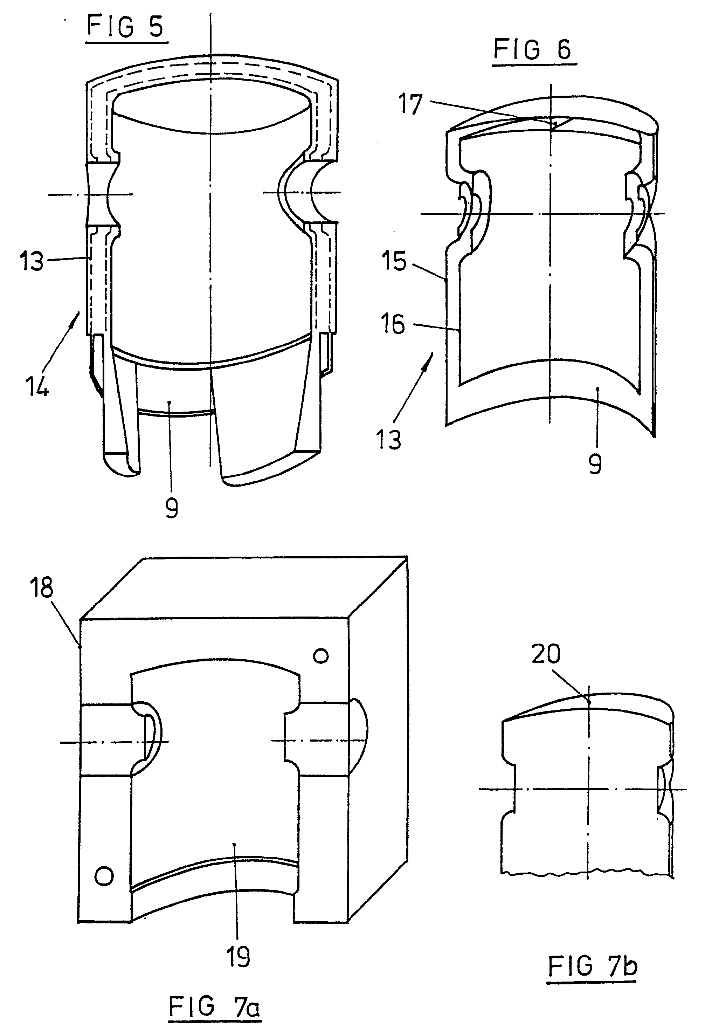

Bei dem der Figur 6 zugrundeliegenden Armierungskörper handelt es sich um das Traggerüst 13 für einen der Figur 5 zugrundeliegenden Keramikkolben 14. Das Traggerüst 13 besitzt, wie in Figur 5 mit gestrichelten Linien angedeutet ist, eine innenoberflächennahe und eine aussenoberflächennahe Wandung und besteht dementsprechend, wie am besten aus Figur 6 erkennbar ist, aus zwei ineinander angeordneten Töpfen 15, 16, die durch Distanzleisten 17 mit entsprechendem Abstand aneinander befestigt sein können, so daß ebenfalls ein in sich steifer Hohlkörper entsteht. Die Verankerung dieses Armierungskörpers 13 am Formwerkzeug kann im Bereich der unteren Stirnseite des Kolbenhemds erfolgen. Zur Bildung der entsprechenden Haltelasche 9 ist im dargestellten Ausführungsbeispiel der äußere Topf 15 einfach gegenüber dem inneren Topf 16 entsprechend verlängert. Ansonsten gelten für den Aufbau des Armierungskörpers 13 ebenfalls die obigen Ausführungen.

Die Töpfe 15 bzw. 16 können in einem kernkastenartigen Werkzeug hergestellt werden, das den Figuren 7a, 7b zugrundeliegt. Dieses Werkzeug besteht dementsprechend aus einem der Figur 7a zugrundeliegenden Kasten 18 mit Formhohlraum 19 und einem der Figur 7b zugrundeliegenden, zum Eingriff in den Formhohlraum 19 bringbaren Einsatzstück 20. Die Matte wird zwischen Kasten 18 und Einsatzstück 20 eingelegt und zur Versteifung vor oder nach dem Einlegen mit einem Versteifungsmittel, beispielsweise Epoxydharz oder Keramikschlicker, getränkt. Im Falle eines Hohlprofilkörpers hier vorliegender Art werden zunächst zwei Hälften hergestellt, die anschliessend miteinander verbunden werden, wie in Figur 8 durch Verbingungsnähte 25 angedeutet ist. Sofern beim fertigen Bauteil im Bereich der Verbindungsnähte 25 des Armierungskörpers keine nennenswerten Kräfte übertragen werden müssen, kann die Verbindung eine Klebeverbindung sein, die den Brenntemperaturen nicht standhalten muß. Andernfalls können eine Schweißverbindung bzw. Spleißverbindung oder dergleichen in Frage kommen. Auf ähnliche Weise können ersichtlich die Teile des den Figuren 2 und 4 zugrundeliegenden Traggerüst 2 bzw. 11 hergestellt werden. Bei Verwendung einer abnehmbaren Ausfütterung im Bereich des Formhohlraums 19 können der größere und der kleinere Topf 15 bzw. 16 mit Hilfe ein und desselben Werkzeugs hergestellt werden.

**Ansprüche**

1. Verfahren zur Herstellung von Formteilen als Verbundkörper, die aus nach einem Formvorgang gebranntem, keramischem Material, das im ungebrannten Zustand pulverförmig ist, und einer im keramischen Material eingebetteten, aus Fasermaterial mit gegenüber dem keramischen Material erhöhter Festigkeit bestehenden Armierung bestehen, **dadurch gekennzeichnet, daß** die Armierung als in sich steifes, räumliches Traggerüst (2 bzw. 11 bzw.

13) ausgebildet ist, das aus versteiften, zumindest teilweise aus C-Fasern bestehenden Fasermatten (4) mit einer für das keramische Material durchlässigen Struktur gebildet wird und eine der Geometrie des Formteils (1 bzw. 10 bzw. 14) angepaßte Geometrie sowie eine den aufzunehmenden Kräften proportionale Dichte aufweist, daß das die Armierung bildende Traggerüst (2 bzw. 11 bzw. 13) vor der Füllung des Formhohlraums mit keramischem Material in der Form positioniert, verankert und gelagert wird und daß das keramische Material in pulverförmigem Zustand durch schlagartiges Evakuieren des Formhohlraums fluidisiert und in den Formhohlraum eingeschossen wird.

2. Verfahren nach Anspruch 1, **dadurch gekennzeichnet, daß** mehrere, aufeinanderfolgende Vakuumschüsse vorgesehen sind.

3. Verfahren nach Anspruch 1, **dadurch gekennzeichnet, daß** vor dem Brennen wenigstens ein vorzugsweise isostatischer Preßvorgang vorgesehen ist.

4. Verfahren nach Anspruch 1, **dadurch gekennzeichnet, daß** das Traggerüst (2, 11, 13) eine zur Oberfläche des Formteils (1, 10, 14) zumindest weitgehend parallele Konfiguration aufweist.

5. Verfahren nach Anspruch 4, **dadurch gekennzeichnet, daß** das Traggerüst (2, 11, 13) einen bezüglich der Oberfläche des Formteils (1, 10, 14) zumindest weitgehend oberflächennahen Wandverlauf aufweist.

6. Verfahren nach Anspruch 1, **dadurch gekennzeichnet, daß** das Traggerüst (2, 11, 13) als Hohlkörper mit vorzugsweise geschlossenem Querschnitt ausgebildet ist oder aus mehreren derartigen Hohlkörpern zusammengesetzt ist.

7. Verfahren nach Anspruch 1, **dadurch gekennzeichnet, daß** das Traggerüst (2, 11, 13) wenigstens eine vorzugsweise versteifte und gegen Sauerstoffangriff geschützte Halterung, vorzugsweise in Form einer Befestigungslasche (9) und/oder einer Profilträgerverlängerung (9a) aufweist.

8. Verfahren nach Anspruch 1, **dadurch gekennzeichnet, daß** die Fasermatten (4) zur Versteifung mit einem Versteifungsmittel behandelt sind.

9. Verfahren nach Anspruch 8, **dadurch gekennzeichnet, daß** die Fasermatten (4) zur Versteifung mit Keramikschlicker getränkt werden, der anschließend getrocknet und/oder gebrannt wird.

10. Verfahren nach Anspruch 1, **dadurch gekennzeichnet, daß** das Traggerüst (2, 11, 13) in einer kernkastenähnlichen Form (18, 20) hergestellt wird.

11. Verfahren nach Anspruch 1, **dadurch gekennzeichnet, daß** das Traggerüst (2, 11, 13) ein in sich steifes, vorzugsweise als Grundgerüst (3) für die Matten (4) dienendes Raumgitter enthält.

12. Verfahren nach Anspruch 11, **dadurch gekennzeichnet, daß** das Raumgitter (Grundgerüst 3) aus Metall,.vorzugsweise Stahl, besteht.

13. Verfahren nach Anspruch 11, **dadurch gekennzeichnet, daß** das Raumgitter (Grundgerüst 3) aus einen runden Querschnitt aufweisenden Stäben bzw. Drähten besteht.

14. Verfahren nach einem der vorhergehenden Ansprüche, **dadurch gekennzeichnet, daß** die Abkühlung des gebrannten Formkörpers (1, 10, 14) und/oder des zur Versteifung gebrannten Traggerüsts (2, 11, 13) einer Normalglühung für das Material des Raumgitters (Grundgerüst 3) entspricht.

15. Verfahren nach Anspruch 1, **dadurch gekennzeichnet, daß** die Fasermatten (4) ausschließlich C-Fasern enthalten.

16. Verfahren nach Anspruch 1, **dadurch gekennzeichnet, daß** die das Fasergeflecht bildenden Matten (4) zumindest teilweise Si-Fasern enthalten.

17. Verfahren nach Anspruch 1, **dadurch gekennzeichnet, daß** die das Fasergeflecht bildenden Matten (4) zumindest teilweise Glasfasern enthalten.

18. Verfahren nach Anspruch 1, **dadurch gekennzeichnet, daß** das Formteil (1, 10, 14) in einem Vakuumofen gebrannt wird.

19. Verfahren nach Anspruch 1, **dadurch gekennzeichnet, daß** das Traggerüst (2, 11, 13) im Bereich offener Querschnitte mit wenigstens einem den offenen Querschnitt überbrückenden, vorzugsweise mit Keramikschlicker getränkten Zugband (9b) versehen wird, das nach dem Brennen beseitigt wird.

20. Verfahren nach Anspruch 1, **dadurch gekennzeichnet, daß** in das keramische Material zur Vereinfachung des Traggerüsts (2, 11, 13) Armierungsfasern, vorzugsweise Siliciumkarbidfasern, eingemischt sind.

**Claims**

1. A method for the production of moldings in the form of composite bodies, which consist of ceramic material fired after a molding operation, said ceramic material being in the form of a powder in the unfired condition, and of a reinforcement which is embedded in the ceramic material and consists of fiber material with a strength greater than that of the ceramic material, characterized in that the reinforcement is in the form of a three dimensional supporting structure (2 and, respectively, 11 and, respectively, 13), which is formed by stiffened fiber mats (4), consisting at least partly of C-fibers, with a structure which is permeable for the ceramic material and has a geometry adapted to the geometry of the molding (1 and, respectively, 10 and, respectively, 14) and has a density proportional to the forces to be resisted, in that the supporting structure (2 and, respectively, 11 and, respectively, 13) forming the reinforcement is positioned, anchored and mounted prior to filling of the mold cavity with ceramic material and in that while in a powder form the ceramic material is fluidized and shot into the mold cavity by sudden evacuation of the mold cavity.

2. The method as claimed in claim 1, characterized in that several consecutive vacuum shots are caused to take place.

3. The method as claimed in claim 1, characterized in that prior to firing at least one preferably isostatic pressing operation is performed.

4. The method as claimed in claim 1 characterized in that the supporting structure (2, 11 and 13) has a configuration at least substantially parallel to the surface of the molding (1, 10 and 14).

5. The method as claimed in claim 4, characterized in that the supporting structure (2, 11 and 13) has a wall form at least substantially superficially near the surface of the molding (1, 10 and 14).

6. The method as claimed in claim 1, characterized in that the supporting structure (2, 11 and 13) is made in the form of a hollow body with a preferably unbroken cross section or is made up of a plurality of such hollow bodies.

7. The method as claimed in claim 1, characterized in that the supporting structure (2, 11 and 13) has at least one preferably stiffened holder which is protected against attack by oxygen, preferably in the form of a securing lug (9) and/or a girder extension (9a).

8. The method as claimed in claim 1, characterized in that the fiber mats (4) are processed with stiffening material for stiffening them.

9. The method as claimed in claim 8, characterized in that the fiber mats (4) are impregnated with ceramic slip for stiffening and the slip is then dried and/or fired.

10. The method as claimed in claim 1, characterized in that the supporting structure (2, 11 and 13) is produced in a corebox-like form (18 and 20).

11. The method as claimed in claim 1, characterized in that the supporting structure (2, 11 and 13) comprises an inherently stiff three dimensional lattice, preferably as a basic structure (3) for the mats (4).

12. The method as claimed in claim 11, characterized in that the threedimensional lattice (basic structure 3) consists of metal and preferably steel.

13. The method as claimed in claim 11, characterized in that the three dimensional lattice (basic structure 3) consists of rods or, respectively, wires having a round cross section.

14. The method as claimed in any one of the preceding claims characterized in that the cooling of the fired molding (1, 10 and 14) and/or of the supporting structure (2, 11 and 13) used for stiffening, is performed corresponding to normalizing of the material of the three dimensional lattice (basic structure 3).

15. The method as claimed in claim 1, characterized in that the fiber mats (4) are composed exclusively of C-fibers.

16. The method as claimed in claim 1, characterized in that the mats (4) forming the fiber braid at least partly contain Si-fibers.

17. The method as claimed in claim 1, characterized in that the mats (4) forming the fiber braid at least partly contain glass fibers.

18. The method as claimed in claim 1, characterized in that the molding (1, 10 and 14) is fired in a vacuum kiln.

19. The method as claimed in claim 1, characterized in that the supporting structure (2, 11 and 13) adjacent to open cross sections is provided with at least one tie (9b) spanning the open cross section and preferably impregnated with ceramic slip, same being removed after firing.

20. The method as claimed in claim 1, characterized in that in order to simplify the supporting structure (2, 11 and 13) reinforcing fibers, preferably silicon carbide fibers, are mixed with the ceramic material.

## Revendications

1. Procédé pour fabriquer des objets moulés sous la forme d'éléments composites comprenant de la matière céramique qui est cuite après une opération de formage et qui est pulvérulente à l'état non cuit, et une armature noyée dans la matière céramique et constituée par de la matière en fibres ayant une résistance supérieure à celle de la matière céramique, **caractérisé en ce que** l'armature est constituée par une ossature spatiale rigide en soi (2, 11, 13) qui est formée par des nattes raidies (4), faites au moins partiellement de fibres de carbone et ayant une structure perméable à la matière céramique, et qui présente une géométrie adaptée à la géométrie de l'objet à mouler (1, 10, 14), ainsi qu'une densité proportionnelle aux forces à supporter, en ce que l'ossature (2, 11, 13) formant l'armature est positionnée, ancrée et calée dans le moule avant le remplissage de la cavité du moule par de la matière céramique, et en ce que la matière céramique à l'état pulvérulent est fluidifiée et injectée dans la cavité du moule par application brusque d'un vide à la cavité du moule.

2. Procédé selon la revendication 1, **caractérisé en ce que** plusieurs applications successives de vide sont prévues.

3. Procédé selon la revendication 1, **caractérisé en ce qu'**au moins une opération de pressage, de préférence isostatique, est prévue avant la cuisson.

4. Procédé selon la revendication 1, **caractérisé en ce que** l'ossature (2, 11, 13) présente une configuration au moins approximativement parallèle à la surface de l'objet (1, 10, 14).

5. Procédé selon la revendication 4, **caractérisé en ce que** l'ossature (2, 11, 13) présente un profil de paroi qui suit au noins approximativement la surface de l'objet (1, 10, 14).

6. Procédé selon la revendication 1, **caractérisé en ce que** l'ossature (2, 11, 13) est constituée par un corps creux, de préférence à section transversale fermée, ou se compose de plusieurs corps creux de ce genre.

7. Procédé selon la revendication 1, **caractérisé en ce que** l'ossature (2, 11, 13) comporte au moins un support, de préférence raidi et protégé contre l'attaque de l'oxygène et se présentant de préférence sous la forme d'une patte de fixation (9) et/ou d'une prolongation (9a) d'un profilé.

8. Procédé selon la revendication 1, **caractérisé en ce que** les nattes de fibres (4) sont raidies par traitement au moyen d'un agent de renforcement.

9. Procédé selon la revendication 8, **caractérisé en ce que** les nattes de fibres (4) sont raidies par imprégnation de barbotine, laquelle est ensuite séchée et/ou cuite.

10. Procédé selon la revendication 1, **caractérisé en ce que** l'ossature (2, 11, 13) est réalisée en forme de caisson (18, 20).

11. Procédé selon la revendication 1, **caractérisé en ce que** l'ossature (2, 11, 13) comprend une grille spatiale rigide, servant de préférence d'ossature de base (3) pour les nattes (4).

12. Procédé selon la revendication 11, **caractérisé en ce que** ladite grille spatiale (ossature de base 3) est en métal, de préférence en acier.

13. Procédé selon la revendication 11, **caractérisé en ce que** ladite grille spatiale (ossature de base 3) est faite de barres ou de fils ayant une section circulaire.

14. Procédé selon l'une des revendications précédentes, **caractérisé en ce que** le refroidissement de l'élément moulé et cuit (1, 10, 14) et/ou de l'ossature (2, 11, 13) cuite pour être raidie correspond à un recuit de normalisation de la matière de la grille spatiale (ossature de base 3).

15. Procédé selon la revendication 1, **caractérisé en ce que** les nattes de fibres (4) contiennent uniquement des fibres de carbone.

16. Procédé selon la revendication 1, **caractérisé en ce que** les nattes (4) formant le réseau de fibres contiennent au moins partiellement des fibres de silicium.

17. Procédé selon la revendication 1, **caractérisé en ce que** les nattes (4) formant le réseau de fibres contiennent au moins partiellement des fibres de verre.

18. Procédé selon la revendication 1, **caractérisé en ce que** l'objet moulé (1, 10, 14) est cuit dans un four à vide.

19. Procédé selon la revendication 1, **caractérisé en ce que** l'ossature (2, 11, 13), dans des zones à section ouverte, comporte au moins une bande de traction (9b) enjambant la section ouverte, et de préférence imprégnée de barbotine, cette bande étant supprimée après la cuisson.

20. Procédé selon la revendication 1, **caractérisé en ce que**, pour simplifier l'ossature (2, 11, 13), des fibres d'armature, de préférence des fibres de carbure de silicium, sont mélangées à la matière céramique.

## FIG 1

## FIG 2

FIG 3

11

10

FIG 4

9

9

11

12

4

9a

9b

FIG 5

13

14

9

FIG 6

17

15

16

13

9

18

19

FIG 7a

20

FIG 7b

FIG 8

4

13

15

16

17

25

FIG 9

22

21

24

23